# EUROPEAN PATENT APPLICATION

(11) **EP 4 826 680 A1**
(43) Date of publication of application: **21.10.2026**
(21) Application number: 24918253.6
(22) Date of filing: 06.12.2024
(51) Int. Cl.: G06V 20/58

(54) **PANORAMIC OBJECT DETECTION METHOD AND DEVICE, VEHICLE AND STORAGE MEDIUM**

(30) Priority: 16.01.2024 CN 202410066056
(71) Applicant: GUANGDONG SFOUNDINT TECHNOLOGY CO., LTD., Foshan, Guangdong 528000 (CN)
(72) Inventor: WU, Tzu-Sung, Foshan, Guangdong 528000 (CN); WEI, Jianquan, Foshan, Guangdong 528000 (CN); ZHU, Pengcheng, Foshan, Guangdong 528000 (CN); CHEN, Fuxin, Foshan, Guangdong 528000 (CN); CHEN, Hairu, Foshan, Guangdong 528000 (CN); WU, Jinlan, Foshan, Guangdong 528000 (CN); DAI, Wenhao, Foshan, Guangdong 528000 (CN); TAN, Chong, Foshan, Guangdong 528000 (CN); SHAO, Junhui, Foshan, Guangdong 528000 (CN)
(74) Representative: Bockermann & Partner Patentanwälte PartGmbB
(86) International application number: PCT/CN2024/137526
(87) International publication number: WO 2025/152645

(57) **Abstract**

The present application provides a panoramic object detection method, a panoramic object detection device, a vehicle, and a storage medium, belongs to the technical field of assisted driving. The method includes: acquiring scene images captured by cameras around a vehicle; generating a bird's-eye view panoramic scene image based on all the scene images; for every two adjacent scene images, determining a recognized object in an image overlapping region between the two scene images, and determining distance measurement information between the recognized object and the vehicle respectively obtained by two current cameras; for every two adjacent scene images, fusing the two pieces of distance measurement information based on the respective distance measurement fusion weights of the two current cameras, to obtain unique distance measurement information between the recognized object and the vehicle; and generating marker information of the recognized object in the panoramic scene image based on the unique distance measurement information.

## Description

### CROSS-REFERENCE TO RELATED APPLICATIONS

This application claims priority to Chinese Patent Application No. 202410066056.0, filed on January 16, 2024, the entire contents of which are incorporated herein by reference.

### TECHNICAL FIELD

The present application relates to the technical field of assisted driving, and in particular, to a panoramic object detection method, a panoramic object detection device, a vehicle, and a storage medium.

### BACKGROUND

Panoramic image systems aim to enhance driving experience, safety, and convenience, and play an important role particularly in low-speed driving scenarios.

However, in the related art, detection by panoramic imaging systems has some blind spots or dead angles. For example, in stitching regions of multiple camera viewing angles, the panoramic imaging system may have defects such as image misalignment. This situation may cause the target object to disappear from the display screen or make it difficult to determine its position relative to the vehicle body, thereby causing the driver to misjudge the existence and relative distance of the target object, which may affect timely detection and avoidance of obstacles.

### SUMMARY

The main objective of the present application is to provide a panoramic object detection method, a panoramic object detection device, a vehicle, and a storage medium, aiming to solve the problem in the related art that, due to processing defects in image stitching regions, detection by panoramic imaging systems may have blind spots and dead angles, causing target objects to disappear from the display screen or making it difficult to determine their position relative to the vehicle body.

In order to achieve the above objective, in a first aspect, the present application provides a panoramic object detection method, including: acquiring scene images captured by cameras around a vehicle; generating a bird's-eye view panoramic scene image based on all the scene images; for every two adjacent scene images, determining a recognized object in an image overlapping region between the two scene images, and determining distance measurement information between the recognized object and the vehicle respectively obtained by two current cameras, where the two current cameras are cameras respectively corresponding to the two adjacent scene images, and in a preset fusion weight table, the two current cameras respectively have distance measurement fusion weights; for every two adjacent scene images, fusing the two pieces of distance measurement information based on the respective distance measurement fusion weights of the two current cameras, to obtain unique distance measurement information between the recognized object and the vehicle; and generating marker information of the recognized object in the panoramic scene image based on the unique distance measurement information.

In an embodiment, the generating the bird's-eye view panoramic scene image based on all the scene images includes: performing view transformation on the scene images to obtain bird's-eye view images; for an image overlapping region between every two adjacent bird's-eye view images, determining, from the preset fusion weight table, respective pixel fusion weights of any two adjacent bird's-eye view images; for every two adjacent bird's-eye view images, performing fusion processing on the image overlapping region of the two adjacent bird's-eye view images based on the two pixel fusion weights, to obtain fused adjacent bird's-eye view images; and generating the bird's-eye view panoramic scene image based on all the fused adjacent bird's-eye view images.

In an embodiment, for every two adjacent scene images, the determining the recognized object in the image overlapping region between the two scene images includes: inputting each of the scene images into an object detection model respectively to obtain the recognized object, the recognized object having a classification confidence level and a localization confidence level; obtaining a comprehensive confidence level according to the classification confidence level and the localization confidence level of an object image region of the recognized object; and outputting the recognized object whose comprehensive confidence level is greater than a preset confidence level as a final recognized object.

In an embodiment, the object detection model outputs a plurality of overlapping detection boxes for the same recognized object; the obtaining the comprehensive confidence level according to the classification confidence level and the localization confidence level of the object image region of the recognized object includes: for each detection box of the recognized object, determining a localization confidence level and a classification confidence level corresponding to the detection box; filtering out detection boxes whose localization confidence level is less than a preset localization confidence threshold among all the detection boxes, to obtain a preliminary filtered detection box set; for each detection box in the preliminary filtered detection box set, determining a classification result with a maximum classification confidence level as an object category of the recognized object corresponding to the detection box; merging the detection boxes in the preliminary filtered detection box set based on the object category, to obtain a merged detection box set; performing weighted fusion on all the detection boxes in the merged detection box set using a weighted non-maximum suppression algorithm, to obtain a unique detection box corresponding to the recognized object; and obtaining the comprehensive confidence level based on the classification confidence level and the localization confidence level of the unique detection box; the comprehensive confidence level = classification confidence level × localization confidence level.

In an embodiment, the outputting the recognized object whose comprehensive confidence level is greater than the preset confidence level as the final recognized object includes: taking the recognized object whose comprehensive confidence level is greater than the preset confidence level as the recognized object; updating a current object detection set based on the recognized object; and outputting all recognized objects in the current object detection set.

In an embodiment, for every two adjacent scene images, the fusing the two pieces of distance measurement information based on the respective distance measurement fusion weights of the two current cameras, to obtain the unique distance measurement information between the recognized object and the vehicle includes: in response to that the recognized object appears in the image overlapping region, recognizing, in the two scene images respectively, image features corresponding to the recognized object; determining binocular distance measurement information of the recognized object according to pixel position information of the image features in a binocular imaging system; the binocular imaging system being composed of the two cameras corresponding to the two scene images; and fusing the binocular distance measurement information with the two pieces of distance measurement information based on two distance measurement fusion weights and a binocular fusion weight of the binocular distance measurement information, to obtain the unique distance measurement information of the recognized object.

In an embodiment, for every two adjacent scene images, the fusing the two pieces of distance measurement information based on the respective distance measurement fusion weights of the two current cameras, to obtain the unique distance measurement information between the recognized object and the vehicle includes: acquiring recognized object perception information collected by a perception sensor; determining a perception fusion weight corresponding to the perception sensor from the preset fusion weight table; and fusing the two pieces of distance measurement information and the recognized object perception information based on the perception fusion weight and the two distance measurement fusion weights, to obtain the unique distance measurement information of the recognized object.

In an embodiment, after fusing the two pieces of distance measurement information based on the respective distance measurement fusion weights of the two current cameras for every two adjacent scene images, to obtain the unique distance measurement information between the recognized object and the vehicle, the method further includes: determining a decision level of the recognized object according to the unique distance measurement information of each recognized object; determining, from all recognized objects, an alarm object corresponding to the highest risk level; determining a target camera to which the alarm object belongs; and displaying the scene image of the target camera.

In a second aspect, in order to achieve the above objective, the present application further provides a panoramic object detection device, including: an acquisition module, configured to acquire scene images captured by cameras around a vehicle; a panoramic image generation module, configured to generate a bird's-eye view panoramic scene image based on all the scene images; a distance measurement fusion weight calculation module, configured to, for every two adjacent scene images, determine a recognized object in an image overlapping region between the two scene images, and determine distance measurement information between the recognized object and the vehicle respectively obtained by two current cameras, where the two current cameras are cameras respectively corresponding to the two adjacent scene images, and in a preset fusion weight table, the two current cameras respectively have distance measurement fusion weights; a fusion module, configured to, for every two adjacent scene images, fuse the two pieces of distance measurement information based on the respective distance measurement fusion weights of the two current cameras, to obtain unique distance measurement information between the recognized object and the vehicle; and a recognition module, configured to generate marker information of the recognized object in the panoramic scene image based on the unique distance measurement information.

In a third aspect, in order to achieve the above objective, the present application further provides a vehicle, including: a processor; a memory; and a panoramic object detection program stored in the memory, where the panoramic object detection program, when executed by the processor, implements the panoramic object detection method as described above.

In a fourth aspect, in order to achieve the above objective, the present application further provides a computer-readable storage medium, the computer-readable storage medium stores a panoramic object detection program, and the panoramic object detection program, when executed by a processor, implements the panoramic object detection method as described above.

The present application performs relevant processing on scene images obtained through cameras mounted on the vehicle body to generate a 360° bird's-eye panoramic image around the vehicle. For the recognized object in the image overlapping region of two adjacent scene images, the distance measurement information between the recognized object and the vehicle respectively obtained by the two cameras is determined. Then, for the two pieces of distance measurement information, fusion processing is performed on the two pieces of distance measurement information according to distance measurement fusion weights preset in a fusion weight table, to obtain more accurate unique distance measurement information between the target object and the vehicle. Subsequently, based on the unique distance measurement information, the position information of the target object relative to the vehicle body can be calculated, and based on the position information, marker information of the recognized object can be correspondingly generated in the generated panoramic scene image.

Through this embodiment, acquisition of 360° bird's-eye view scene information around the vehicle is achieved, and accurate measurement of information of target objects around the vehicle is achieved through distance measurement fusion weights, thereby realizing annotation of recognized objects in the panoramic scene image. By annotating recognized objects in the panoramic scene image, it is possible to avoid the problem in traditional panoramic image systems where, due to image misalignment defects during image stitching, target objects disappear from the display screen or their positions relative to the vehicle body become difficult to determine. Vehicle drivers can accurately understand the situation of obstacles around the vehicle based on the marker information in the panoramic scene image, thereby achieving timely avoidance.

### BRIEF DESCRIPTION OF THE DRAWINGS

FIG. 1 is a schematic structural diagram of a vehicle according to the present application.
FIG. 2 is a schematic flow chart of a first embodiment of the panoramic object detection method according to the present application.
FIG. 3 is a detailed schematic flow chart of step S200 of the first embodiment of the panoramic object detection method according to the present application.
FIG. 4 is a schematic flow chart of a second embodiment of the panoramic object detection method according to the present application.
FIG. 5 is a schematic flow chart of step S330 of the second embodiment of the panoramic object detection method according to the present application.
FIG. 6 is a schematic flow chart of a third embodiment of the panoramic object detection method according to the present application.
FIG. 7 is a schematic diagram of a binocular imaging system according to the present application.
FIG. 8 is a schematic flow chart of a fourth embodiment of the panoramic object detection method according to the present application.
FIG. 9 is a schematic flow chart of a fifth embodiment of the panoramic object detection method according to the present application.
FIG. 10 is a first schematic structural diagram of an example of the present application.
FIG. 11 is a second schematic structural diagram of an example of the present application.
FIG. 12 is a third schematic structural diagram of an example of the present application.

The realization of the objectives, functional features, and advantages of the present application will be further described with reference to the accompanying drawings in conjunction with the embodiments.

### DETAILED DESCRIPTION OF THE EMBODIMENTS

It should be understood that the specific embodiments described herein are merely for explaining the present application and are not intended to limit the present application.

Panoramic image systems aim to enhance driving experience, safety, and convenience, and play an important role particularly in low-speed driving scenarios.

However, in the related art, detection by panoramic imaging systems may have some blind spots or dead angles. For example, in stitching regions of multiple camera viewing angles, the panoramic imaging system may have defects such as image misalignment. This situation may cause the target object to disappear from the display screen or make it difficult to determine its position relative to the vehicle body, thereby causing the driver to misjudge the existence and relative distance of the target object, which may affect timely detection and avoidance of obstacles.

The following embodiments of the present application will describe the panoramic object detection method, the panoramic object detection device, the vehicle, and the storage medium applied in the technical implementation of the present application:

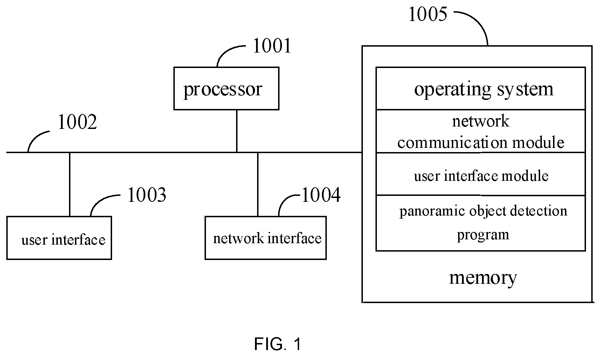

Referring to FIG. 1, FIG. 1 is a schematic structural diagram of a vehicle in a hardware operating environment involved in the solution of the embodiments of the present application.

As shown in FIG. 1, the vehicle may include: a processor 1001, such as a CPU, a user interface 1003, a memory 1005, and a communication bus 1002. The communication bus 1002 is used to implement connection and communication between these components. The user interface 1003 may include a voice acquisition module, such as a microphone array, etc. The user interface 1003 may also be a display screen, an input unit such as a keyboard, etc. The memory 1005 may be a high-speed RAM memory, or may be a stable memory (non-volatile memory), such as a disk memory. The memory 1005 may also be a storage device independent of the aforementioned processor 1001.

The vehicle may further include a network interface 1004, and the network interface 1004 may include a standard wired interface, a wireless interface (such as a WI-FI interface). In an embodiment, the vehicle may further include a Radio Frequency (RF) circuit, sensors, an audio circuit, a WIFI module, and the like.

Those skilled in the art will appreciate that the vehicle structure shown in FIG. 1 does not constitute a limitation on the vehicle, and may include more or fewer components than those shown in the figure, or a combination of certain components, or have a different arrangement of components.

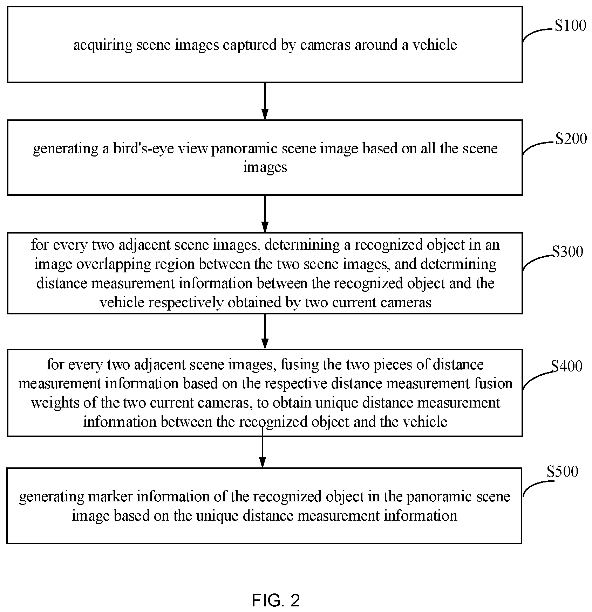

Based on the above hardware structure of the vehicle but not limited to the above hardware structure, the present application provides a first embodiment of a panoramic object detection method. Referring to FIG. 2, FIG. 2 shows a schematic flow chart of the first embodiment of the panoramic object detection method according to the present application.

It should be noted that although a logical sequence is shown in the flow chart, in some cases the steps shown or described may be performed in an order different from that herein.

In this embodiment, the panoramic object detection method includes:
Step S100, acquiring scene images captured by cameras around a vehicle;
Step S200, generating a bird's-eye view panoramic scene image based on all the scene images.

In this embodiment, the cameras are arranged around the vehicle, and each camera can capture scene information within its field of view to generate scene images.

Compared with other cameras, fisheye cameras can obtain scene information with a wider angle of view. In this embodiment, taking fisheye cameras as an example, four fisheye cameras are arranged at the front, rear, left, and right positions of the vehicle to ensure that scene images of scene information around the vehicle at 360° can be acquired.

The scene images captured by fisheye cameras usually have a horizontal field of view. Compared with the horizontal view, bird's-eye view images can provide a more three-dimensional scene observation angle, helping the driver and the vehicle to more comprehensively understand the information around the vehicle. Therefore, in this embodiment, the acquired scene images are subjected to corresponding view transformation processing and image stitching operations to generate a bird's-eye view panoramic scene image containing scene information around the vehicle at 360°.

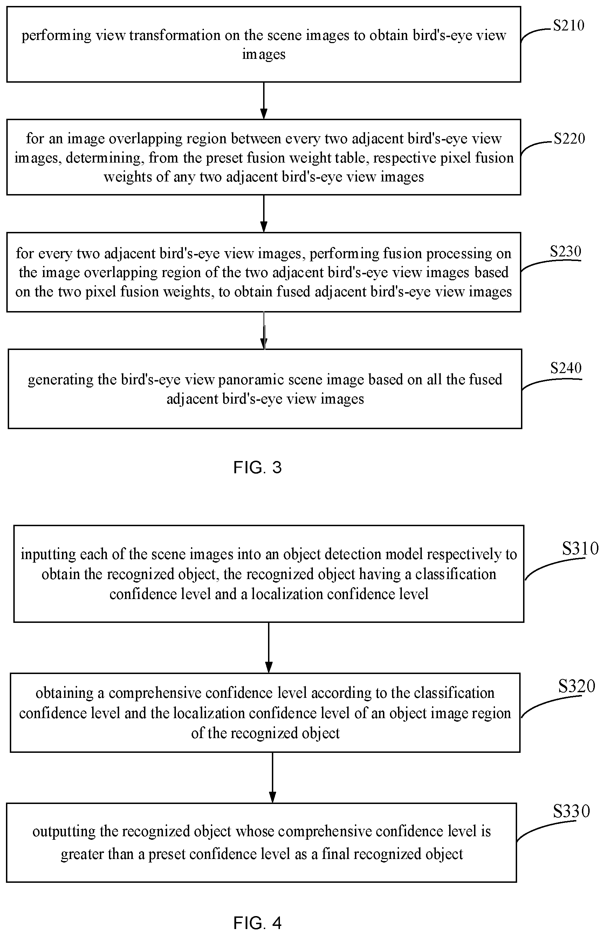

As shown in FIG. 3, as a specific implementation, the step S200 includes:
Step S210, performing view transformation on the scene images to obtain bird's-eye view images.

In this implementation, the scene images from the fisheye cameras are first subjected to distortion correction processing. Then, based on the distortion-corrected scene images in the horizontal view, a homography matrix for transformation between the horizontal view and the bird's-eye view is used to perform a top-down transformation on the horizontal-view scene images, converting them into bird's-eye view images.

In a specific example, a horizontal scene image with a calibration cloth can first be acquired through the fisheye cameras installed on the vehicle, wherein the calibration cloth needs to be placed at the four corners of the vehicle, and adjacent calibration cloths need to be kept on the same horizontal line. After the horizontal scene image is acquired, a distortion correction operation is performed on the horizontal scene image. Feature points of the calibration cloth, such as corner points of the calibration cloth and other points with obvious features, are selected on the distortion-corrected horizontal image. At the same time, feature points of the calibration cloth in a distortion-free scene image under a bird's-eye view corresponding to the horizontal view are found. Based on the spatial relationship between the corresponding feature points in the distortion-corrected horizontal view image and the distortion-free bird's-eye view image, a homography matrix for transformation between the horizontal view image and the bird's-eye view is calculated. Each fisheye camera on the vehicle corresponds to one homography matrix, and the calculated homography matrix is stored for subsequent bird's-eye view transformation of scene images captured by the fisheye cameras. A specific application method is shown in Formula 1: ${\left(\begin{matrix}x \\ y \\ 1\end{matrix}\right)}_{bird} = H ∗ {\left(\begin{matrix}x \\ y \\ 1\end{matrix}\right)}_{origin}$
${\left(\begin{matrix}x \\ y \\ 1\end{matrix}\right)}_{origin}$ represents the homogeneous coordinates of the corresponding point in the horizontal-view image captured by a certain fisheye camera on the vehicle, H represents the homography matrix corresponding to that camera, and ${\left(\begin{matrix}x \\ y \\ 1\end{matrix}\right)}_{bird}$ represents the homogeneous coordinates of the corresponding point in the bird's-eye view image obtained after top-down transformation of the horizontal-view image.

In the example, pixel fitting can be used for distortion correction of the horizontal-view image. The known horizontal-view image is a distorted fisheye image. The process of undistorting the horizontal-view image is a process of finding the mapping relationship between each point in the horizontal-view image and the distortion-corrected horizontal-view image. Calibration objects with known three-dimensional coordinates at various angles can be captured using the fisheye cameras on the vehicle, and their corresponding two-dimensional coordinates in the images can be recorded. The fisheye cameras are calibrated using the known three-dimensional coordinates and the corresponding two-dimensional coordinates in the captured images. During the camera calibration process, the internal parameters of the camera (such as focal length and principal point position) are estimated, and distortion fitting coefficients are also estimated. Since the radial distortion of the camera is generally nonlinear, an optimization algorithm (such as the least squares method) is used during the camera calibration process to perform nonlinear optimization on the distortion fitting coefficients, so as to find the optimal distortion fitting coefficients and record and save them. In practical applications, a specific distortion correction method is shown in Formula 2: $x ′ = x \left(1+{k}_{1}{r}^{2}+{k}_{2}{r}^{4}+{k}_{3}{r}^{6}+{k}_{4}{r}^{8}\right)$ $y ′ = y \left(1+{k}_{1}{r}^{2}+{k}_{2}{r}^{4}+{k}_{3}{r}^{6}+{k}_{4}{r}^{8}\right)$

In Formula 2, (x', y') represents the normalized coordinates of the corresponding point in the horizontal-view image before distortion correction, (x, y) represents the normalized image coordinates of the corresponding point in the distortion-free horizontal-view image, k₁, k₂, k₃, k₄ represent the distortion fitting coefficients, and r represents the distance from the corresponding point in the distortion-free horizontal-view image to the image center point.

Through the view transformation of the scene images captured by the fisheye cameras, the conversion from the horizontal view to the bird's-eye view for three-dimensional scene observation is achieved, providing the driver and the vehicle with more comprehensive surrounding information. Through distortion correction processing and top-down transformation, the distorted scene images around the vehicle are successfully converted into distortion-free bird's-eye view images, improving the geometric accuracy and information restoration degree of the images.

Step S220, for an image overlapping region between every two adjacent bird's-eye view images, determining, from a preset fusion weight table, respective pixel fusion weights of any two adjacent bird's-eye view images.

In this implementation, the image overlapping region between bird's-eye view images is the overlapping portion of the fields of view between two adjacent fisheye cameras on the vehicle as correspondingly shown in the bird's-eye view images. The pixel fusion weights represent the weight proportions of individual pixel points within the overlapping region during image stitching of the bird's-eye view images.

After performing top-down transformation on the horizontal-view images captured by two adjacent fisheye cameras to obtain the corresponding bird's-eye view images, the overlapping portions of each bird's-eye view image are identified, and the weight proportions of the corresponding pixel points in the overlapping portions are determined from the fusion weight table. The fusion weight table records the fusion weight proportions of each pixel point in the overlapping regions of bird's-eye view images corresponding to each fisheye camera on the vehicle. In this embodiment, the sum of the pixel fusion weights of the corresponding pixel points in the overlapping region of two adjacent bird's-eye view images is 1, and the weight proportion of each bird's-eye view image is determined based on the fusion effect. In a specific example, for the overlapping region of two adjacent bird's-eye view images, the pixel fusion weight of the corresponding pixel point in one bird's-eye view image is sequentially increased from 0 to 1, while the fusion weight of the corresponding pixel point in the other bird's-eye view image is correspondingly decreased from 1 to 0. The fusion weight that yields the best fusion effect is recorded in the fusion weight table for use in subsequent image fusion processing.

Through the construction and recording of the pixel fusion weight table, optimized fusion of the overlapping regions of bird's-eye view images captured by adjacent fisheye cameras is achieved. By gradually adjusting the pixel fusion weights within the overlapping regions of adjacent bird's-eye view images, the optimal fusion effect is determined, enabling natural transition and seamless stitching of the images within the overlapping regions.

Step S230, for every two adjacent bird's-eye view images, performing fusion processing on the image overlapping region of the two adjacent bird's-eye view images based on the two pixel fusion weights, to obtain fused adjacent bird's-eye view images.

In this implementation, for every two adjacent bird's-eye view images, the pixel fusion weights corresponding to each pixel point in the two images are used to perform fusion processing on the image overlapping region between them.

Weighted fusion is performed on the pixel points in the overlapping region of the adjacent bird's-eye view images according to the pixel fusion weights predetermined in the fusion weight table.

Step S240, generating a bird's-eye view panoramic scene image based on all the fused adjacent bird's-eye view images.

In this implementation, the overall image formed by combining all the fused adjacent bird's-eye view images is the panoramic scene image.

The final panoramic scene image reflects the overall situation of the environment around the vehicle and can provide a more comprehensive information foundation for subsequent target object detection. It provides more detailed and accurate environmental awareness for driving, ensuring safe driving of the vehicle under complex road conditions.

Step S300, for every two adjacent scene images, determining a recognized object in an image overlapping region between the two scene images, and determining distance measurement information between the recognized object and the vehicle respectively obtained by two current cameras.

The two current cameras are cameras respectively corresponding to the two adjacent scene images, and in a preset fusion weight table, the two current cameras respectively have distance measurement fusion weights.

Step S400, for every two adjacent scene images, fusing the two pieces of distance measurement information based on the respective distance measurement fusion weights of the two current cameras, to obtain unique distance measurement information between the recognized object and the vehicle.

In this embodiment, the recognized object is a target object identified in the scene images, for example, people, dogs, and other target objects in the scene images that may affect vehicle driving. Scene images captured simultaneously by two cameras may contain the same recognized object in the image overlapping region.

The distance measurement information represents the measured distance between the recognized object and the vehicle in world coordinates. Due to the influence of camera errors, the distance measurement information of the recognized object calculated from scene images captured by different cameras may be different.

The distance measurement fusion weights represent the weight proportions corresponding to the distance measurement information between the recognized object in the scene images captured by each camera and the vehicle. In this embodiment, distance detection is performed separately for the recognized object in each scene image to determine the respective corresponding distance measurement information, and then weighted fusion is performed on the distance measurement information to obtain more accurate unique distance measurement information.

By calculating the ratio between world coordinates and pixel coordinates, after obtaining this ratio, the distance measurement information between the recognized object and the camera in world coordinates can be calculated by calculating the pixel distance of the recognized object in the scene image, as specifically shown in Formula 3: $\frac{{l}_{world}}{{l}_{pixel}} = \frac{Δ {distance}_{world}}{Δ {distance}_{pixel}}$

In Formula 3, l_{world} represents the world coordinates of the recognized object, lₚᵢₓₑₗ represents the pixel coordinates of the recognized object in the scene image, Δdistanceₚᵢₓₑₗ represents the pixel distance of the recognized object in the scene image, and Δdistance_{world} represents the distance measurement information of the recognized object in world coordinates.

After calculating the distance measurement information between the recognized object and the vehicle respectively obtained by the two current cameras, weighted fusion is performed on these two pieces of distance information according to the distance measurement fusion weights of the two cameras.

In this embodiment, the distance measurement fusion weight of each camera is determined by the distance measurement error of the camera in the image fusion region. Due to algorithm errors, camera performance, and other factors, the calculated distance measurement information between the recognized object and the camera may have a certain error from the actual distance. The distance information between two adjacent cameras and the same target object at different positions can be calculated separately, and these distance information can be compared with the actual distance to obtain the respective error distribution of the two adjacent cameras. Based on the error distribution, the respective distance measurement fusion weights of the two adjacent cameras are determined, and the distance measurement fusion weights are recorded in the weight fusion table for subsequent determination of unique distance measurement information in actual target recognition processes.

The distance measurement fusion weights take into account the influence of camera image distortion. Within the camera detection area, when the same target is located at different positions in the image, the distance error is affected by image distortion. Image edge positions generally have more severe distortion, and accordingly, the target distance measurement error also becomes larger. By comparing the real coordinate position of the target in world coordinates with the coordinate position obtained through image distance measurement, an error distribution relationship between the pixel region and the target's true distance measurement information can be established. For the same target object within the stitching region, the target distance measurement information detected by different cameras is different. Whether it is the same target can be determined based on the error distribution combined with the motion characteristics of the target within the time series. On this basis, the corresponding fusion coefficients can be assigned according to the above fusion weights, ultimately obtaining accurate target marker information.

In a specific example, the manner of determining the distance measurement fusion weights is shown in Formula 4: ${w}_{i} = \frac{1}{2}$ ${δ}_{i}^{2} {\sum }_{j = 1} \frac{1}{{δ}_{j}^{2}}$

*wᵢ* is the distance measurement fusion weight of the i-th camera, and δ ᵢ represents the variance between the distance measurement errors of the i-th camera and target objects at different positions in the image fusion region. It can be understood that the variance between distance measurement errors can represent the error distribution of the camera.

In this embodiment, for the view overlapping region of two adjacent cameras, weighted fusion is performed on the distance measurement information corresponding to each camera according to the distance measurement fusion weight of the distance measurement information between each camera and the recognized object, so that more accurate unique distance information between the vehicle and the target object can be obtained. This helps to reduce the uncertainty caused by the distance measurement error of a single camera and improve the overall distance measurement accuracy.

Step S500, generating marker information of the recognized object in the panoramic scene image based on the unique distance measurement information.

After the unique distance measurement information between the recognized object and the vehicle is determined, the position coordinate information of the recognized object relative to the vehicle can be determined based on the unique distance measurement information. For example, in the world coordinate system (centered on the vehicle), based on the unique distance measurement information of the target object and the angle between the recognized object and the vehicle, the position coordinates of the recognized object in the world coordinate system can be determined. Based on the conversion relationship between the world coordinate system and the image coordinate system of the panoramic scene image, the position information corresponding to the recognized object in the panoramic scene image is determined, and the marker information of the recognized object is generated at the corresponding position. The marker information allows the vehicle driver to intuitively see the relative position and relative distance between the recognized object and the vehicle.

The present application achieves the acquisition of 360° bird's-eye view scene information around the vehicle, and through accurate measurement of target object information around the vehicle using distance measurement fusion weights, realizes annotation of recognized objects in the panoramic scene image. By annotating recognized objects in the panoramic scene image, it is possible to avoid the problem in traditional panoramic image systems where, due to image misalignment defects during image stitching, target objects disappear from the display screen or their positions relative to the vehicle body become difficult to determine. Vehicle drivers can accurately understand the situation of obstacles around the vehicle based on the marker information in the panoramic scene image, thereby achieving timely avoidance.

Referring to FIG. 4, FIG. 4 shows a schematic flow chart of a second embodiment of the panoramic object detection method according to the present application. In this embodiment, step S300 includes:

Step S310, inputting each scene image into an object detection model respectively to obtain the recognized object, the recognized object having a classification confidence level and a localization confidence level.

Step S320, obtaining a comprehensive confidence level according to the classification confidence level and the localization confidence level of a target image region of the recognized object.

Step S330, outputting the recognized object whose comprehensive confidence level is greater than a preset confidence level as a final recognized object.

In this embodiment, each camera around the vehicle corresponds to the object detection model, and the object detection model can be used to detect recognized objects in the scene images captured by the corresponding vehicle camera. Recognized objects are obstacles such as people, other vehicles, dogs, etc. that need to be avoided during driving. In this embodiment, the classification confidence level represents the confidence of the object detection model in the category to which the recognized object belongs. Specifically, for each target recognized by the object detection model, the classification confidence level measures the probability or confidence level that the target belongs to a specific category. For example, if the model detects that a target object is a vehicle, the classification confidence level indicates how likely it is that the region is indeed a vehicle.

The localization confidence level represents the confidence of the object detection model in the accuracy of the position of the recognized object in the image. Specifically, for each target detected by the object detection model, the localization confidence level measures how confident the model is about the accuracy of the target's position in the image.

The comprehensive confidence level represents a comprehensive measure of the model's confidence in both the classification and localization aspects of the recognized object. The comprehensive confidence level is obtained by multiplying the classification confidence level and the localization confidence level of the target image region. The comprehensive confidence level can more comprehensively reflect the model's overall confidence level in each recognized object. The higher the comprehensive confidence level, the more confident the model is about the category and position information of the recognized object. Recognized objects with a comprehensive confidence level greater than the preset confidence level can be output as the final result.

In a specific example, data of target objects to be identified in actual application scenarios is collected offline, including images under different angles, different lighting, different environments, different backgrounds, and other conditions. The images are annotated and input into models that can perform image recognition and analysis tasks, such as machine learning models and neural network models, for training. The predicted information output by model inference is compared with manually annotated validation datasets to confirm the convergence state of model training, and finally the desired object detection model is obtained. The object detection model outputs the localization confidence level, classification confidence level, 2D detection box, and key points of the recognized object.

The object detection model may output multiple overlapping detection boxes for the same recognized object. In order to avoid duplicate counting, these detection boxes need to be filtered. In this embodiment, the Weighted Non-Maximum Suppression (NMS) algorithm is used to perform weighted fusion on each detection box, and the detection box with the highest confidence level is selected as the final detection result.

First, the localization confidence level and the classification confidence level of each detection box of the recognized object are obtained. Detection boxes with localization confidence levels below a specific localization confidence threshold are preliminarily filtered out. Then, among the preliminarily filtered detection boxes, the classification result with the maximum classification confidence level is selected as the category of each detection box, and these detection boxes are classified and merged.

Subsequently, the detection box with the highest localization confidence level among the merged detection boxes is used as the reference box, and the Intersection over Union (IoU) between other detection boxes and this reference box is calculated. Based on the IoU value, a weight factor for each detection box is determined. The larger the IoU value, the higher the weight factor of the detection box. Weighted fusion is performed on the merged detection boxes according to the weight factors, to obtain the unique detection box to be output for the same recognized object. Through the above method, all recognized objects in a scene image can be detected and marked, with each different recognized object corresponding to a unique detection box to be output.

Further screening is performed on each recognized object. Different confidence thresholds are set according to different target object types. The localization confidence level and the classification confidence level of the detection box to be output for each recognized object are multiplied to obtain a comprehensive confidence level. The comprehensive confidence level is used as the criterion for determining whether the target is a real object, and recognized objects with a comprehensive confidence level higher than the preset confidence level are output.

This embodiment is a process of target object recognition in scene images captured by each vehicle camera. By introducing the comprehensive confidence level as the criterion for determining whether a recognized object is correct, a more comprehensive and reliable target perception capability is provided, and the accuracy and robustness of target object recognition are improved.

| Table 1: Performance Indicators of original Algorithm model | | | | | | |
|---|---|---|---|---|---|---|
| Type | Number of pictures | Number of labels | Accuracy | Recall rate | mAP@0.5 average accuracy | mAP@ 0.5:0.95 average accuracy |
| all | 10137 | 39418 | 0.953 | 0.876 | 0.927 | 0.78 |
| roller | 10137 | 3566 | 0.988 | 0.96 | 0.979 | 0.758 |
| loader | 10137 | 111 | 0.981 | 0.928 | 0.96 | 0.749 |
| person | 10137 | 14508 | 0.945 | 0.798 | 0.887 | 0.756 |
| road_cone | 10137 | 2786 | 0.972 | 0.972 | 0.982 | 0.857 |
| car | 10137 | 17899 | 0.873 | 0.814 | 0.869 | 0.751 |

In order to verify the detection accuracy and recall rate of target detection in this example, public datasets and custom scene datasets were used for testing and comparison, and various performance indicators were analyzed and compared. A picture dataset of 10,137 images in complex scenes was used as the test set, with a total of 39,418 labels. The original object detection model was first used to test this dataset. After statistical analysis, the data in Table 1 were obtained as performance indicators of the original algorithm model for reference.

| Table 2: Performance Indicators of this example | | | | | | |
|---|---|---|---|---|---|---|
| Type | Number of pictures | Number of labels | Accuracy | Recall rate | mAP@0.5 average accuracy | mAP@ 0.5:0.95 average accuracy |
| all | 10137 | 39418 | 0.967 | 0.91 | 0.951 | 0.831 |
| roller | 10137 | 3566 | 0.991 | 0.97 | 0.983 | 0.801 |
| loader | 10137 | 111 | 0.982 | 0.935 | 0.965 | 0.788 |
| person | 10137 | 14508 | 0.963 | 0.862 | 0.901 | 0.781 |
| road_cone | 10137 | 2786 | 0.982 | 0.973 | 0.985 | 0.881 |
| car | 10137 | 17899 | 0.912 | 0.853 | 0.898 | 0.791 |

Subsequently, the object detection model of this example was used to test the same batch of datasets. After statistical analysis, Table 2 was obtained as performance indicators of the self-developed algorithm for reference.

A comparison of the performance indicators of the original algorithm model and the algorithm model provided in this example yielded Table 3 for reference. It can be seen from Table 3 that, compared with the original algorithm model, the detection accuracy and recall rate of the object detection model in this example have both improved to varying degrees. This further demonstrates that this embodiment provides a more comprehensive and reliable target perception capability, and improves the accuracy of target object recognition.

| Table 3: Percentage Improvement in Performance Indicators | | | | | | |
|---|---|---|---|---|---|---|
| Type | Number of pictures | Number of labels | Accuracy | Recall rate | mAP@0.5 average accuracy | mAP@ 0.5:0.95 average accuracy |
| all | 10137 | 39418 | ↑1.4% | ↑3.6% | ↑2.4% | ↑5.1% |
| roller | 10137 | 3566 | ↑0.3% | ↑1% | ↑0.4% | ↑4.3% |
| loader | 10137 | 111 | ↑0.1% | ↑0.7% | ↑0.5% | ↑3.9% |
| person | 10137 | 14508 | ↑1.8% | ↑7.6% | ↑1.4% | ↑2.5% |
| road_cone | 10137 | 2786 | ↑1% | ↑0.1% | ↑0.2% | ↑2.4% |
| car | 10137 | 17899 | ↑3.9% | ↑3.9% | ↑2.9% | ↑4% |

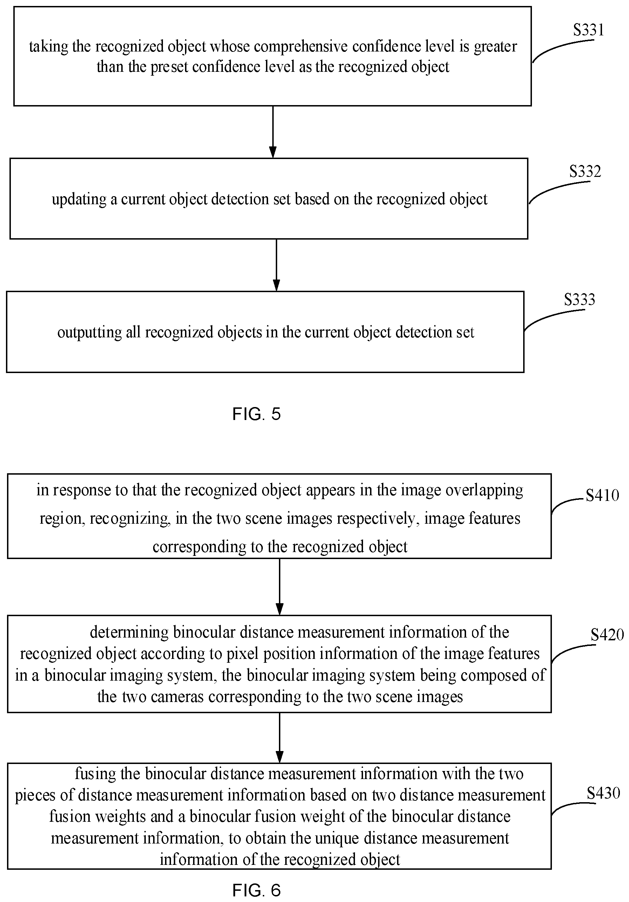

As a specific implementation, referring to FIG. 5, in this embodiment, step S330 includes:
Step S331, taking the recognized object whose comprehensive confidence level is greater than a preset confidence level as a final recognized object.
Step S332, updating a current object detection set based on the final recognized object.
Step S333, outputting all recognized objects in the current object detection set.

In this embodiment, the object detection set is a set of recognized objects in the previously captured frame of scene images.

This embodiment is a dynamic recognition process for target objects in the scene around the vehicle. After recognizing target objects in the current frame of scene images, the recognized object whose comprehensive confidence level is greater than the preset confidence level is taken as the final recognized object. The final recognized objects recognized in the current frame are searched and matched with the recognized objects of the previous frame in the object detection set, and the object detection set is updated. Subsequently, the target objects in the updated object detection set are synchronously annotated on the panoramic scene image.

In a specific example, the current frame of scene images captured by each vehicle camera is input into the object detection model for prediction to obtain various recognized objects. If the current frame is the first frame, the relevant data of the recognized objects are directly saved to the object detection set. The object detection set mainly includes the horizontal coordinate information, vertical coordinate information, detection box width, and length of the lower edge center point of the detection box of the recognized objects. If the current frame is not the first frame, the recognized objects of the current frame are sequentially matched with the recognized objects of the previous frame in the object detection set.

If a recognized object of the current frame successfully matches a recognized object of the previous frame in the object detection set, it is considered that the recognized object of the current frame and the successfully matched recognized object of the previous frame are the same target. The Kalman filter algorithm is used to update the state of the recognized object of the previous frame, and weighted fusion processing is performed on the relevant data of the recognized object of the previous frame in combination with the relevant data of the recognized object of the current frame, to output more stable and smoother updated data.

If the recognized object of the current frame fails to find a matching recognized object of the previous frame in the object detection set, it is considered that the recognized object of the current frame is a newly appeared target object, and the recognized object of the current frame is saved to the object detection set.

If the recognized object in the object detection set has no matching recognized object in the current frame for three consecutive frames, it is considered that the recognized object in the object detection set has moved out of the vehicle detection range, and the recognized object is removed from the tracking algorithm list.

By determining targets whose comprehensive confidence level is higher than a preset threshold as final recognized objects, the system can timely and accurately identify targets in the current frame of scene images. Subsequently, through steps such as search matching, Kalman filtering, and fusion processing, dynamic updating of the object detection set is achieved. This effectively reduces data redundancy, achieves smooth tracking of target motion states, and automatically handles newly appearing targets and targets moving out of the field of view, improving the system's ability to perceive dynamic targets in scenes around the vehicle, and providing more accurate and reliable input information for subsequent processing.

Referring to FIG. 6, FIG. 6 shows a schematic flow chart of a third embodiment of the panoramic object detection method according to the present application. In this embodiment, the step S400 includes:
Step S410, if the recognized object appears in the image overlapping region, then respectively recognizing image features corresponding to the recognized object in the two scene images.
Step S420, determining binocular distance measurement information of the recognized object according to pixel position information of the image features in a binocular imaging system.
Step S430, fusing the binocular distance measurement information with the two pieces of distance measurement information based on the two distance measurement fusion weights and a binocular fusion weight of the binocular distance measurement information, to obtain unique distance measurement information of the recognized object.

The binocular imaging system is composed of the two cameras corresponding to the two scene images. The binocular fusion weight represents the weight proportion of the binocular distance measurement information when determining the unique distance measurement information.

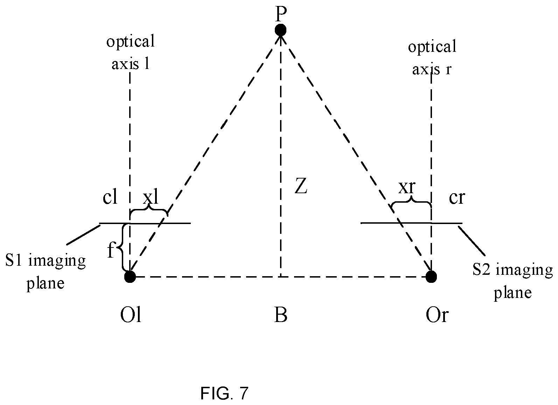

In this embodiment, the binocular distance measurement information refers to the distance information of the recognized object in the image fusion region acquired through the binocular imaging system. The two cameras on the vehicle that have overlapping viewing angle regions can be regarded as a binocular imaging system. As shown in FIG. 7, according to the binocular imaging principle, the binocular distance measurement information of the recognized object relative to the binocular imaging system can be determined. In FIG. 7, Ol and Or are the optical centers of two adjacent cameras, xl and xr are the pixel positions of the distance measurement reference point P of the recognized object on the s1 imaging plane and the s2 imaging plane, and Z is the binocular distance measurement information between the distance measurement reference point P and the binocular imaging system.

The distance measurement reference point of the recognizable target object in the image overlapping region of one scene image is obtained. Through a feature matching algorithm, the distance measurement reference point corresponding to the recognized object is searched and matched in the other scene image. Based on the pixel position information of these two distance measurement reference points on the corresponding images, the binocular distance measurement information of the recognized object relative to the binocular imaging system can be calculated. Specifically, see Formula 5: $Z = f * B / D$

In Formula 5, D is the disparity between the two cameras in the binocular imaging system, which can be determined by the pixel position information of the distance measurement reference points corresponding to the two cameras, B is the baseline distance between the two cameras, f is the corrected focal length of the two cameras in the binocular imaging system, and Z is the binocular distance measurement information.

After the binocular distance measurement information is determined, weighted fusion is performed on the binocular distance measurement information and the respective distance measurement information of the two adjacent cameras according to the distance measurement fusion weights corresponding to the two adjacent cameras and the binocular fusion weight corresponding to the binocular imaging system, to calculate the unique distance measurement information.

The binocular fusion weight can also be obtained by looking up the fusion weight table. The binocular fusion weight in the fusion weight table can be determined by calculating the error distribution between the binocular distance measurement information and the actual distance measurement information of the binocular imaging system and target objects at different positions.

By combining the binocular distance measurement information with the distance measurement information of the two adjacent cameras, the accuracy and robustness of the overall distance measurement can be further improved.

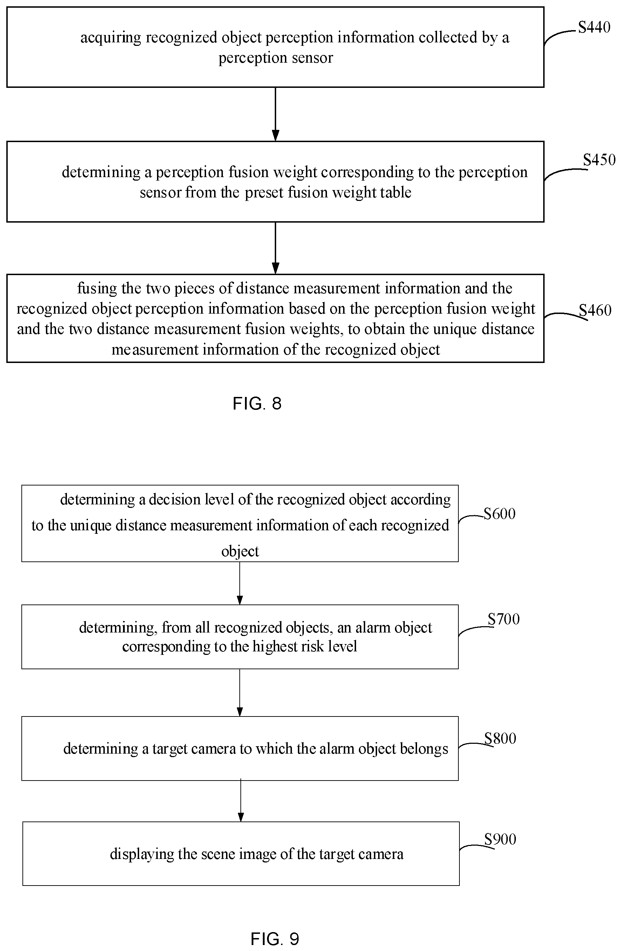

Referring to FIG. 8, FIG. 8 shows a schematic flow chart of a fourth embodiment of the panoramic object detection method according to the present application. In this embodiment, the step S400 includes:
Step S440, acquiring recognized object perception information collected by a perception sensor.
Step S450, determining a perception fusion weight corresponding to the perception sensor from a preset fusion weight table.
Step S460, fusing the two pieces of distance measurement information and the recognized object perception information based on the two distance measurement fusion weights and the perception fusion weight, to obtain the unique distance measurement information of the recognized object.

In this embodiment, the perception sensor may be an environmental perception device such as an ultrasonic radar, millimeter-wave radar, or the like. The recognized object perception information may be distance information from the recognized object to the vehicle body detected by the perception sensor in the viewing angle overlapping region. The perception fusion weight may be the weight occupied by the target perception information measured by each perception sensor during fusion.

The perception fusion weight corresponding to the sensor can be obtained from the fusion weight table. Based on the perception fusion weight and the distance measurement fusion weights, the distance measurement information and the target perception information are subjected to weighted fusion to obtain the unique distance measurement information.

In a specific example, in a target object recognition system composed of n perception sensors, sensors s1, s2, ..., sn detect the same target, and the local estimation errors of any two sensors are uncorrelated with each other. In the fusion weight table, the perception fusion weights of the respective sensors are *w*₁, *w*₂, ...,*wₙ*(*w*₁ +*w*₂ + ... + *wₙ*= 1). The perception fusion weights are determined by the distance measurement error distribution of each sensor in the viewing angle overlapping region. Specifically, see Formula 6: ${w}_{i} = \frac{1}{n}$ ${δ}_{i}^{2} {\sum }_{j = 1} \frac{1}{{δ}_{j}^{2}}$

*wᵢ* is the perception fusion weight of the i-th perception sensor, and *δᵢ* represents the variance between the distance measurement errors of the i-th perception sensor and target objects at different positions in the viewing angle overlapping region. In this formula, δᵢ also includes the variance between the distance measurement errors of the camera and target objects at different positions in the viewing angle overlapping region, that is, wᵢ also includes the distance measurement fusion weight.

After the perception fusion weights corresponding to each sensor are determined, the target perception information (distance measurement information) measured by the n perception sensors (including cameras) can be weighted and fused to obtain the final unique distance measurement information.

This embodiment, by combining the distance measurement information of the target object acquired by the cameras and the perception sensors, and using the distance measurement fusion weights and perception fusion weights respectively corresponding to the cameras and perception sensors in the fusion weight table, achieves fusion of multi-source distance measurement information for the same target, improves the accuracy and reliability of the target distance measurement information, and reduces the error from the actual distance.

Referring to FIG. 9, FIG. 9 shows a schematic flow chart of a fourth embodiment of the panoramic object detection method according to the present application. In this embodiment, after the step S400, the method further includes:
Step S600, determining an alarm level of the recognized object according to the unique distance measurement information of each recognized object.
Step S700, determining, from all recognized objects, an alarm object corresponding to the highest alarm level.
Step S800, determining a target camera to which the alarm object belongs.
Step S900, displaying the scene image of the target camera.

In this embodiment, the alarm level is divided according to the distance from the recognized object to the vehicle body. For example, according to the distance from the target object to the vehicle body, the alarm levels are divided from low to high into safe, general alarm, and danger alarm. When the alarm level is at danger alarm, it indicates that the recognized object is too close to the vehicle body, and the driver can be alerted by issuing an alarm signal or other means.

In this embodiment, the unique distance measurement information of the recognized object is used as the criterion for determining the alarm level. The unique distance measurement information of all recognized objects in the panoramic scene image is detected, and the recognized object whose unique distance measurement information corresponds to the highest alarm level is determined as the alarm object. Subsequently, the target camera that detected the alarm object is determined, and the scene image captured by this camera at the current moment is displayed. Distance information from the recognized object to the vehicle body is annotated at the corresponding position in the image, providing a reference for the driver.

This embodiment divides alarm levels based on the unique distance measurement information of recognized objects, further determines the alarm object, and displays the corresponding scene image, achieving precise detection and alarm prompting of panoramic targets, improving the driver's ability to perceive and respond to the surrounding environment, thereby enhancing driving safety.

To enable those skilled in the art to better understand this embodiment, the technical solution of this embodiment is explained below through specific implementation examples in specific application scenarios. The following examples are only for explaining the present application and are not intended to limit the scope of the present application.

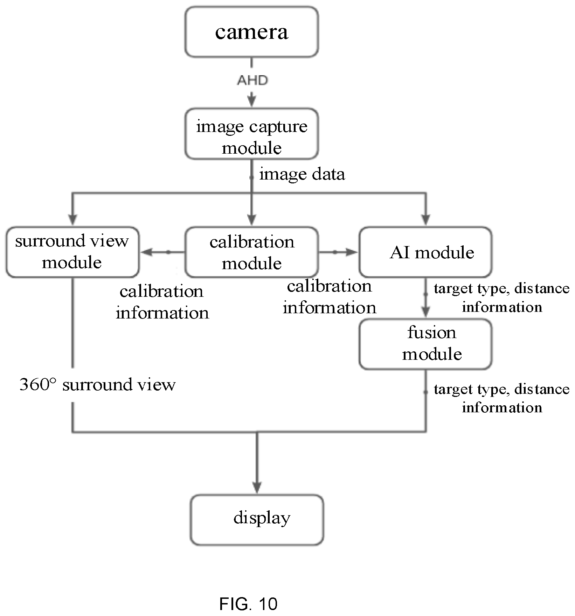

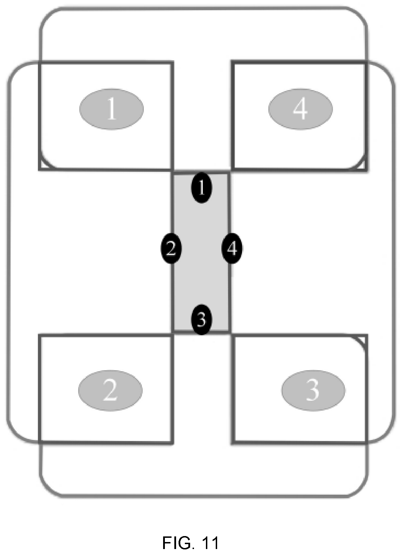

As shown in FIG. 10, FIG. 10 is a schematic structural diagram of a panoramic object detection system according to this example. In this example, the system includes cameras, which are installed on a target vehicle in the manner shown in FIG. 11. The cameras transmit signals to an image capture module via AHD.

The image capture module is used to respectively provide the image frames transmitted from the cameras to subsequent surround view module, calibration module, and AI module for different algorithm processing.

The calibration module can configure parameters of all internal modules of the system and synchronize the parameters to each module. The calibration module is configured with internal parameters of each camera, distortion fitting coefficients required for image distortion correction, a fusion weight table required for weighted fusion, and homography matrix information required for top-down transformation.

During the parameter configuration process, the calibration module selects relevant parameters of the effective area within the camera's field of view for configuration. For example, configuration information related to scene information far from the vehicle body acquired by the cameras will not be configured in the calibration module. This allows other modules to search only for relevant information in the effective area when performing operations such as table lookup, reducing algorithm computation time.

The stitching module can be used to perform perspective transformation and stitching processing on the same frame of image frames from each camera. After processing, a complete 360° surround view stitched image is obtained, and the image is output to the display screen.

The AI model is used to parse specified targets in the image frames from each camera and frame them with bounding boxes, while simultaneously calculating distance information of the specified targets.

The fusion module uses a weighted fusion algorithm to fuse and associate the same target object in each image frame within the image stitching region, thereby obtaining more accurate target distance information. At the same time, based on the target distance information, the position of the target object relative to the vehicle body is determined, and this position is marked at the corresponding position in the panoramic scene image on the display screen, generating corresponding marker information.

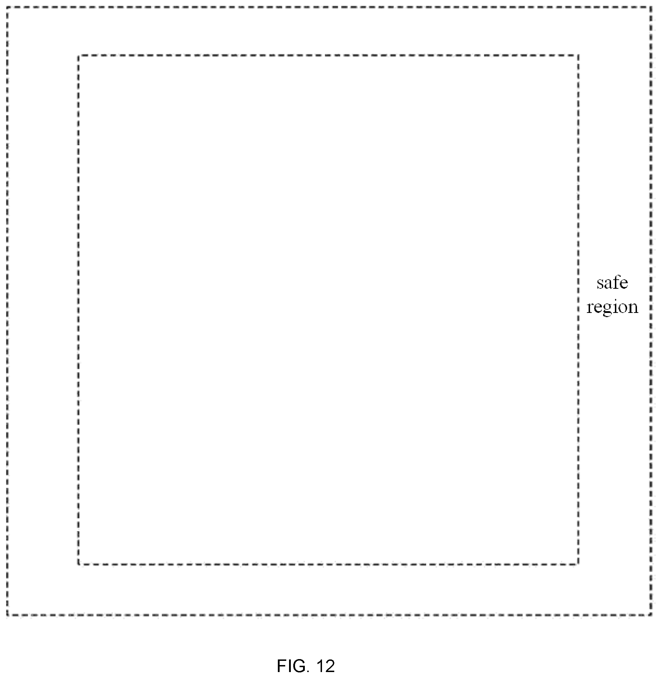

As shown in FIG. 12, this example divides different alarm levels in the panoramic scene image. The range of alarm levels can be flexibly configured between 0 and 10 meters, and is divided into a general alarm region and a danger alarm region. Detected target objects are displayed on the display screen with visual tracking markers. Based on the target distance information output by the fusion module, different levels of alarm sounds and color changes of the tracking circles are used to alert in different danger regions, greatly reducing the burden on the driver in processing invalid information.

The error between the target distance information output by the fusion module and the actual distance is smaller. This not only ensures that when a target is located at the edge of the alarm region, false alarms or missed alarms are not caused by accuracy loss, thereby improving alarm accuracy, but also ensures that when the object is located in the overlapping region of camera viewing angles, it does not switch back and forth between adjacent cameras due to data instability, thereby improving efficiency and safety.

Those of ordinary skill in the art will appreciate that all or part of the processes in the methods of the above embodiments can be implemented by instructing relevant hardware through a computer program. The program can be stored in a computer-readable storage medium, and when executed, the program can include the processes of the methods of the above embodiments. The storage medium may be a magnetic disk, an optical disk, a Read-Only Memory (ROM), or a Random Access Memory (RAM), etc.

Based on the same inventive concept, the present application also provides a panoramic object detection device. The device includes: an acquisition module, configured to acquire scene images captured by cameras around the vehicle; a panoramic image generation module, configured to generate a bird's-eye view panoramic scene image based on all scene images; a distance measurement fusion weight calculation module, configured to, for every two adjacent scene images, determine a recognized object in an image overlapping region between the two scene images, and determine distance measurement information between the recognized object and the vehicle respectively obtained by two current cameras; the two current cameras are cameras respectively corresponding to the two adjacent scene images, and in a preset fusion weight table, the two current cameras respectively have distance measurement fusion weights; a fusion module, configured to, for every two adjacent scene images, fuse the two pieces of distance measurement information based on the respective distance measurement fusion weights of the two current cameras, to obtain unique distance measurement information between the recognized object and the vehicle; a recognition module, configured to generate marker information of the recognized object in the panoramic scene image based on the unique distance measurement information.

For the various embodiments of the panoramic object detection device in this embodiment and the technical effects achieved thereby, reference may be made to the various implementations of the panoramic object detection method in the foregoing embodiments, and details are not repeated here.

Those of ordinary skill in the art will appreciate that all or part of the processes in the methods of the above embodiments can be implemented by instructing relevant hardware through a computer program. The program can be stored in a computer-readable storage medium, and when executed, the program can include the processes of the methods of the above embodiments. The storage medium may be a magnetic disk, an optical disk, a Read-Only Memory (ROM), or a Random Access Memory (RAM), etc.

In addition, it should be noted that the device embodiments described above are merely illustrative. The units described as separate components may or may not be physically separate, and the components shown as units may or may not be physical units, that is, they may be located in one place or distributed over multiple network units. Some or all of the modules may be selected according to actual needs to achieve the objectives of the solution of this embodiment. In addition, in the accompanying drawings of the device embodiments provided in the present application, the connection relationships between modules indicate that they have communication connections with each other, which may be implemented as one or more communication buses or signal lines. Those of ordinary skill in the art can understand and implement them without creative effort.

## Claims

1. A panoramic object detection method, **characterized by** comprising:
acquiring scene images captured by cameras around a vehicle;
generating a bird's-eye view panoramic scene image based on all the scene images;
for every two adjacent scene images, determining a recognized object in an image overlapping region between the two scene images, and determining distance measurement information between the recognized object and the vehicle respectively obtained by two current cameras, wherein the two current cameras are cameras respectively corresponding to the two adjacent scene images, and in a preset fusion weight table, the two current cameras respectively have distance measurement fusion weights;
for every two adjacent scene images, fusing the two pieces of distance measurement information based on the respective distance measurement fusion weights of the two current cameras, to obtain unique distance measurement information between the recognized object and the vehicle; and
generating marker information of the recognized object in the panoramic scene image based on the unique distance measurement information.

2. The panoramic object detection method according to claim 1, wherein the generating the bird's-eye view panoramic scene image based on all the scene images comprises:
performing view transformation on the scene images to obtain bird's-eye view images;
for an image overlapping region between every two adjacent bird's-eye view images, determining, from the preset fusion weight table, respective pixel fusion weights of any two adjacent bird's-eye view images;
for every two adjacent bird's-eye view images, performing fusion processing on the image overlapping region of the two adjacent bird's-eye view images based on the two pixel fusion weights, to obtain fused adjacent bird's-eye view images; and
generating the bird's-eye view panoramic scene image based on all the fused adjacent bird's-eye view images.

3. The panoramic object detection method according to claim 1, wherein for every two adjacent scene images, the determining the recognized object in the image overlapping region between the two scene images comprises:
inputting each of the scene images into an object detection model respectively to obtain the recognized object, the recognized object having a classification confidence level and a localization confidence level;
obtaining a comprehensive confidence level according to the classification confidence level and the localization confidence level of an object image region of the recognized object; and
outputting the recognized object whose comprehensive confidence level is greater than a preset confidence level as a final recognized object.

4. The panoramic object detection method according to claim 3, wherein the object detection model outputs a plurality of overlapping detection boxes for the same recognized object; the obtaining the comprehensive confidence level according to the classification confidence level and the localization confidence level of the object image region of the recognized object comprises:
for each detection box of the recognized object, determining a localization confidence level and a classification confidence level corresponding to the detection box;
filtering out detection boxes whose localization confidence level is less than a preset localization confidence threshold among all the detection boxes, to obtain a preliminary filtered detection box set;
for each detection box in the preliminary filtered detection box set, determining a classification result with a maximum classification confidence level as an object category of the recognized object corresponding to the detection box;
merging the detection boxes in the preliminary filtered detection box set based on the object category, to obtain a merged detection box set;
performing weighted fusion on all the detection boxes in the merged detection box set using a weighted non-maximum suppression algorithm, to obtain a unique detection box corresponding to the recognized object; and
obtaining the comprehensive confidence level based on the classification confidence level and the localization confidence level of the unique detection box; the comprehensive confidence level = classification confidence level × localization confidence level.

5. The panoramic object detection method according to claim 3, wherein the outputting the recognized object whose comprehensive confidence level is greater than the preset confidence level as the final recognized object comprises:
taking the recognized object whose comprehensive confidence level is greater than the preset confidence level as the recognized object;
updating a current object detection set based on the recognized object; and
outputting all recognized objects in the current object detection set.

6. The panoramic object detection method according to claim 1, wherein for every two adjacent scene images, the fusing the two pieces of distance measurement information based on the respective distance measurement fusion weights of the two current cameras, to obtain the unique distance measurement information between the recognized object and the vehicle comprises:
in response to that the recognized object appears in the image overlapping region, recognizing, in the two scene images respectively, image features corresponding to the recognized object;
determining binocular distance measurement information of the recognized object according to pixel position information of the image features in a binocular imaging system, the binocular imaging system being composed of the two cameras corresponding to the two scene images; and
fusing the binocular distance measurement information with the two pieces of distance measurement information based on two distance measurement fusion weights and a binocular fusion weight of the binocular distance measurement information, to obtain the unique distance measurement information of the recognized object.

7. The panoramic object detection method according to claim 1, wherein for every two adjacent scene images, the fusing the two pieces of distance measurement information based on the respective distance measurement fusion weights of the two current cameras, to obtain the unique distance measurement information between the recognized object and the vehicle comprises:
acquiring recognized object perception information collected by a perception sensor;
determining a perception fusion weight corresponding to the perception sensor from the preset fusion weight table; and
fusing the two pieces of distance measurement information and the recognized object perception information based on the perception fusion weight and the two distance measurement fusion weights, to obtain the unique distance measurement information of the recognized object.

8. The panoramic object detection method according to claim 1, wherein after fusing the two pieces of distance measurement information based on the respective distance measurement fusion weights of the two current cameras for every two adjacent scene images, to obtain the unique distance measurement information between the recognized object and the vehicle, the method further comprises:
determining a decision level of the recognized object according to the unique distance measurement information of each recognized object, wherein the decision level comprises at least one of warning, deceleration and braking;
determining, from all recognized objects, an alarm object corresponding to the highest risk level;
determining a target camera to which the alarm object belongs; and
displaying the scene image of the target camera.

9. A panoramic object detection device, **characterized by** comprising:
an acquisition module, configured to acquire scene images captured by cameras around a vehicle;
a panoramic image generation module, configured to generate a bird's-eye view panoramic scene image based on all the scene images;
a distance measurement fusion weight calculation module, configured to, for every two adjacent scene images, determine a recognized object in an image overlapping region between the two scene images, and determine distance measurement information between the recognized object and the vehicle respectively obtained by two current cameras, wherein the two current cameras are cameras respectively corresponding to the two adjacent scene images, and in a preset fusion weight table, the two current cameras respectively have distance measurement fusion weights;
a fusion module, configured to, for every two adjacent scene images, fuse the two pieces of distance measurement information based on the respective distance measurement fusion weights of the two current cameras, to obtain unique distance measurement information between the recognized object and the vehicle; and
a recognition module, configured to generate marker information of the recognized object in the panoramic scene image based on the unique distance measurement information.

10. A vehicle, **characterized by** comprising: a processor; a memory; and a panoramic object detection program stored in the memory, wherein the panoramic object detection program, when executed by the processor, implements the panoramic object detection method according to any one of claims 1 to 8.

11. A computer-readable storage medium, **characterized in that** the computer-readable storage medium stores a panoramic object detection program, and the panoramic object detection program, when executed by a processor, implements the panoramic object detection method according to any one of claims 1 to 8.
